# EUROPÄISCHE PATENTSCHRIFT

(11) **EP 3 192 362 B1**
(45) Veröffentlichungstag und Bekanntmachung des Hinweises auf die Patenterteilung: **03.06.2020**
(21) Anmeldenummer: 17151334.4
(22) Anmeldetag: 13.01.2017
(51) Int. Cl.: A01K 5/015

(54) **HALTEVORRICHTUNG FÜR LECK- UND KNABBERTEILE FÜR TIERE**
HOLDING DEVICE FOR LICKING AND NIBBLING PARTS FOR ANIMALS
DISPOSITIF DE RETENUE POUR PRODUIT À GRIGNOTER ET À LÉCHER POUR ANIMAUX

(30) Priorität: 14.01.2016 DE 202016100166 U
(43) Veröffentlichungstag der Anmeldung: 19.07.2017
(73) Patentinhaber: Sedlmayr, Josef, 86567 Hilgertshausen-Tandern (DE)
(72) Erfinder: Sedlmayr, Josef, 86567 Hilgertshausen-Tandern (DE)
(74) Vertreter: Schmidt, Axel

(56) Entgegenhaltungen:
- DE-C- 343 360
- DE-U1-202009 014 033
- KR-A- 20120 074 609
- KR-A- 20130 021 508
- KR-B1- 101 002 257

## Beschreibung

Die vorliegende Erfindung betrifft eine Haltevorrichtung für ein Leck- und Knabberteil für Tiere, insbesondere einen Mineral- und Salzleckstein für die Zucht und/oder Mast von Nutztieren.

Aus dem Bereich der Land- und Forstwirtschaft ist es seit langer Zeit bekannt, Tieren sog. Lecksteine anzubieten, um ihnen Salze, Mineralien, Spurenelemente und auch Vitamine zuzuführen. Mit einem Gewicht von in der Regel ca. 12 kg werden derartige Lecksteine in Form von Quadern, Würfeln, Zylinder- oder Kegelabschnitten als massive formstabile, feuchtigkeits- und temperaturbeständige Körper angeboten. Diese Leckstein-Körper weisen als Pressteile entlang einer Mittelachse eine durchgehende zylindrische Ausnehmung auf. Durch diese Ausnehmung hindurch können derartige Lecksteine an einem Seil z.B. von einer Decke herab aufgehängt werden, wie es vor allem in Stallungen von Pferden umgesetzt wird. Während im Forstbereich zum Teil sehr einfache Fixierungen über einen langen Nagel auf einem Baumstumpf auch heute noch gebräuchlich sind, ist es in der Zucht, der Mast oder der normalen Tierhaltung von Kühen, Schweinen, Schafen oder Ziegen bekannt, Minerallecksteine der benannten Art über einen Stift oder eine sonstige Stange als Fixierung zu stülpen oder auf einem Teller einer Haltevorrichtung drehbar zu fixieren, wie beispielsweise durch die DE 20 2009 014 033 U1, DE 201 14 938 U1 oder KR20120074609 offenbart. Durch die Drehbarkeit des Lecksteins auf einer jeweiligen Haltevorrichtung wird zum einen erreicht, dass sich der Leckstein beim Lecken und/oder Knabbern durch ein Tier in Drehung versetzt. Daraus ergibt sich eine gleichmäßigere Abnutzung des Lecksteins über einen gesamten Umfang hinweg und mithin eine verlängerte Standzeit des Lecksteins. Ein Lösen des Lecksteins von der Haltevorrichtung mit Erreichen etwa eines hälftigen Verbrauchs des Salz-Mischmaterials wird damit verhindert. Ein einmal von einem Halter herabgefallener Leckstein wird nämlich von den Tieren in der Regel wegen Verschmutzungen nicht mehr angenommen, so dass ein Rest des Lecksteins bei einer entsprechenden Verkürzung der Standzeit sowie einem mit Mehrkosten verbunden Verlust von Nahrungsergänzungsmaterial unbrauchbar ist und kurzfristig von Hand ersetzt werden muss.

Zum anderen ist jedoch auch erkannt worden, dass nicht nur Pferde Minerallecksteine als eine Art von Spielzeug annehmen. Das betreffende Tier wird unter Weckung seiner natürlichen Neugierde also spielerisch beschäftigt, wobei es zugleich in einem selbstbestimmten Maße die vorstehend exemplarisch genannten Elemente bekannter Lecksteine als Nahrungsergänzungsmittel aufnimmt. Wachstum, Gesundheit und/oder Leistung des betreffenden Tieres können damit nachhaltig gesteigert werden.

Als weiterer Vorteil hat sich bei analoger Ausbildung auch von verformbaren Knabberteilen aus Holz oder sonstigen Mischmaterialien zum Knabbern oder Beißen im Bereich der Aufzucht von Ferkeln herausgestellt, dass sich durch das Ausleben des Spieltriebes eine Kannibalisierung der Tiere untereinander insbesondere durch Schwanz- und/oder Ohrbeißen in signifikantem Maße vermindern lässt. Neben einer erhöhten Standzeit von Salz- und/oder Knabberteilen wird damit nicht nur der finanzielle Aufwand für eine anhaltende Überwachung und Versorgung dieser nur beispielhaft genannten Nutztiere gesenkt, es wird insgesamt auch die Wirtschaftlichkeit eines Zuchtbetriebes bei gleichzeitig gesenktem Bedarf an manueller Versorgung bzw. Ergänzung von Gebrauchsmaterialien gesteigert. Zudem schreibt die Tierschutz- Nutztierhaltungsverordnung TierSchNutztV vor, dass Beschäftigungsmaterial für die Tiere in Stallungen vorzusehen ist, so dass vorstehend beschriebe Vorrichtungen vorteilhaft auch alternativ zu Ketten oder ähnlichem Spielzeug verwendet werden können.

Nachfolgend wird ohne Beschränkung oder Bevorzugung einer der vorstehend genannten Verbrauchsmaterialien auf Leck- und Knabberteile oder Minerallecksteine Bezug genommen.

Für die vorliegende Erfindung besteht die Aufgabe, eine Vorrichtung der vorstehend genannten Art hinsichtlich ihrer Handhabbarkeit und Wirtschaftlichkeit noch weiter zu verbessern.

Die Erfindung löst diese Aufgabe dadurch, dass die Haltevorrichtung ein Unterteil mit einem unteren Teller, ein Oberteil mit einem oberen Teller und ein Fußteil umfasst, wobei das Oberteil und das Unterteil über einen Zapfen miteinander lösbar verbunden sind und die Anordnung aus Unterteil und Oberteil um die Längsachse des Salzsteins oder Knabberteils bzw. des Zapfens drehbar ausgebildet ist. Ein Leckstein oder Knabberteil ist also weiterhin über eine in seiner Längsachse verlaufende Ausnehmung auf einem unteren Teller fixierbar, nun durch einen Zapfen. Diese Fixierung wird also dadurch erweitert, dass der Zapfen mit einem an einem dem unteren Teller gegenüberliegenden Ende des Lecksteins oder Knabberteils angeordneten oberen Teller fixiert ist und damit zwischen zwei Tellern fixiert angeordnet ist. Dabei ist die Anordnung um die Längsachse des Salzsteins oder Knabberteils bzw. des Zapfens drehbar ausgebildet. Gemäß der vorliegenden Erfindung ist nun ein Salzstein oder Knabberteil zwischen einem oberen und einem unteren Teller durch eine bereits heute regelmäßig vorhandene Ausnehmung hindurch lösbar fixierbar. Hiermit wird sichergestellt, dass eine Standzeit durch ein verbessertes Verhindern eines Runterwerfens eines Salzsteins oder Knabberteils weiter erhöht wird, wobei zugleich ein einfacher manueller Wechsel oder Einsatz eines verbrauchten durch ein neues Salzleck- und Knabberteil sichergestellt ist.

Demnach ist mindestens einer der Teller durch mindestens einen in radialer Richtung verlaufenden Stab gebildet. Bei mehr als zwei Stäben ist dieser Teller im Wesentlichen sternförmig ausgebildet. Damit wird gegenüber bekannten Tellern ein wesentlicher Teil einer Stirnfläche eines Minerallecksteins oder Knabberteils nicht weiter einem direkten Zugriff eines Tieres vorenthalten bzw. davon abgeschirmt. Grundsätzlich sind ein bis zwei Stäbe je Teller zur Fixierung eines Minerallecksteins oder Knabberteils ausreichend.

Vorteilhafte Weiterbildungen dieser Erfindung sind Gegenstand der abhängigen Ansprüche.

In einer vorteilhaften Ausbildung der Erfindung sind jedoch mindestens drei Stäbe vorgesehen, vorzugsweise sind es fünf bis sechs Stäbe oder drei Doppelstäbe unter gleichmäßiger Verteilung, d.h. mit gleichem Winkel α zu einem jeweils benachbarten Stab. Damit ist eine mit Blick auf eine Abnutzung des Minerallecksteins oder Knabberteils eigentlich unerwünschte Abdeckung auch der Stirnseiten eines betreffenden Leck- und Knabberteils bei zugleich dauerhaft sicherer Fixierung dieses Verbrauchsmaterials minimiert. Das Salzleck- und/oder Knabberteil ist für Tiere damit soweit als möglich gut zugänglich, ohne einen einseitigen Verbrauch des betreffenden Leck- und/oder Knabberteils zu begünstigen.

Vorteilhafter Weise sind freie Enden der Stäbe gekröpft, insbesondere zum teilweisen Umgreifen des zwischen den Tellern eingespannten Mineral- und Salzlecksteins oder Knabberteils. Insbesondere sind die freien Enden der Stäbe soweit gekröpft, dass sie eine verbesserte Fixierung des Minerallecksteins bzw. Knabberteils unter zugleich auftretender Minderung jedes Verletzungsrisikos für das Vieh ermöglichen. Auch durch dieses Merkmal werden eine gute Zugänglichkeit des Steins bzw. des Leck- und/oder Knabberteils, wie auch seine zuverlässige Lagerung bei möglichst gleichmäßigem Verbrauch so weit als möglich aufrechterhalten.

In einer bevorzugten Weiterbildung der Erfindung ist der Zapfen als Verbindung zwischen dem Unterteil und dem Oberteil mehrteilig ausgebildet. Damit ist es vorteilhafterweise auch leicht möglich, dass der Zapfen unter Änderung seiner Länge fixierbar ist, insbesondere drehfest. Damit sind auch die jeweiligen Teller an dem Unterteil und dem Oberteil unter Anpassung auf eine jeweilige Bauhöhe des eingesetzten Leck- und/oder Knabberteils gegeneinander drehfest fixierbar.

Besonders bevorzugt wird, dass ein Teil des Zapfens als Gewindestange oder Schraube oder Gewindeende ausgebildet ist und ein zweiter Teil des Zapfens als Aufnahme mit einer Gewindebohrung. In einer Weiterbildung dieses Merkmals ist die Gewindestange oder Schraube im Bereich des zugehörigen Tellers durch ein Werkzeug betätigbar ausgebildet, insbesondere als durch einen Maul- oder Inbus-Schlüssel betätigbarer Schraubenkopf. Ein nur durch ein Werkzeug, wie z.B. einen Schraub-, Inbus- oder Maulschlüssel betätigbares Teil ist i.d.R. auch durch verspielte, intelligente Tiere, wie z.B. Ferkel und Schweine, nicht lösbar und damit dauerhaft gegen Verlust oder Beschädigung sicher, ohne selber ein nennenswertes zusätzliches Verletzungspotential für das Vieh aufzuweisen.

Vorzugsweise ist die Gewindestange oder Schraube oder das Gewindeende in einer Hülse des zugehörigen Tellers drehbar geführt. Die Hülse kann zumindest beim Einsetzen eines neuen Steins einer Positionierung eines frei entnehmbaren Teils der Anordnung gegenüber einer Ausnehmung in dem neuen Stein dienen, um so auch einen Zusammenbau zu erleichtern. Eine weitere Erleichterung des Zusammenbaus kann dadurch erzielt werden, dass die Hülse mit dem zugehörigen Teller verbunden ist, insbesondere durch Verschweißen einstückig verbunden.

In einer bevorzugten Ausführungsform der Erfindung läuft der Zapfen jenseits des unteren Haltetellers in ein Rohr oder einen in einem Fußteil drehbar fixierten Stab aus. Dabei weist dieses Rohrteil vorzugsweise mindestens eine außenseitige über einen Umfang geschlossene Nut bzw. Ringnut oder Einkerbung auf, in die in einer Einbaulage ein Fixierungselement eines Fußteils lösbar eingreift. Hiermit ist eine einfache und effektive Art einer Höhen- bzw. Niveauregulierung in einer angemessenen Rasterung bei ausreichender und in beiden Richtungen unbeschränkte Drehbarkeit realisiert, die auch eine schnelle Entnahme eines vorstehend beschriebenen aus Oberteil und Unterteil mit dazwischen fixiertem Stein bestehenden Teils des Halters ermöglicht. Damit muss ein Einsetzen eines neuen Steins nicht zwingend vor Ort verfolgen. Vielmehr kann eine Einheit mit einem verbrauchten Stein von einem Fußteil entnommen und schnell ein entsprechender, schon mit einem neuen Stein versehener Teil wieder in dem Fußteil fixiert werden. Damit wird eine Arbeitszeit vor Ort in einem Stall und insbesondere bei nicht entleerter Box in dem Stall umringt von zumindest neugierigen Nutztieren mit dementsprechendem Verletzungspotential oder sonstigen Arbeitserschwernissen deutlich vermindert. Das Einsetzen eines neuen Steins kann also auch leicht außerhalb einer eigentlichen Stallung bei besseren Arbeitsbedingungen erfolgen.

Der Fußteil weist vorzugsweise einen das Rohr des Unterteils aufnehmenden Rohrabschnitt oder eine zylindrische Ausnehmung auf. Vorteilhafterweise ist das Fixierungselement einfach als Schraube ausgeführt, die durch einen Rohrabschnitt sicher in die Nut oder Einkerbung des Rohrteils des Unterteils lösbar hindurchgreift. Es kann sich bei diesem Fixierungselement auch um einen federbelasteten Sicherungsstift handeln, der ohne Werkzeug von Hand gegen eine federelastische Rückstellkraft bei einer Höhenverstellung soweit herausgezogen werden kann, dass die Nut oder Einkerbung des Rohrteils freigegeben ist.

Eine erfindungsgemäße Vorrichtung ist über einem Fußteil auf einem Boden, einer Wand, wie auch an einer Decke sicher und weiterhin drehbar fixierbar ist. Damit ist durch die vorliegende Erfindung vorteilhafterweise auch die Möglichkeit einer insgesamt noch freieren Auswahl zwischen diversen Anordnungs- oder Anbringungsmöglichkeiten für eine erfindungsgemäße Haltevorrichtung gegeben. Zugleich bleiben die Vorteile der Drehbarkeit des Minerallecksteins oder des Knabberteils bei guter Zugänglichkeit durch einen Menschen zum schnellen, sicheren und einfach durchführbaren Ersatz bzw. Einsatz eines neuen Mineralteils bzw. Knabberteils unter leicht durchführbarer Einstellung einer jeweiligen Höhe bzw. eines Niveaus und Anpassung auf die jeweiligen Tiere erhalten.

Vorstehend ist eine drehbare Halterung für einen Mineralleckstein oder ein Knabberteil mit einer verbesserten Sicherung gegen ein Aushebeln und Herunterwerfen zur Erhöhung der Standzeit und damit zur Erhöhung einer Wirtschaftlichkeit derartiger Vorrichtungen beschrieben worden. Der Vorteil einer einfach durchführbaren Höhenverstellbarkeit der Halterung macht sich besonders bei der Aufzucht von Ferkeln und deren raschem Wachstum unter weitgehender Vermeidung jeglicher Kannibalisierungseffekte der Tiere untereinander durch Schwanz- und/oder Ohrbeißen usw. bemerkbar. Durch eine Niveauanpassung werden zusammen mit einer gesicherten Halterung auch die Hygienebedingungen soweit verbessert, was auch hier durch eine erhöhte Standzeit bis zu einem fast vollständigen Aufbrauchen eines jeweiligen Leck- und Knabberteils erreichbar ist. Für unterschiedliche Tiergrößen und Tierarten wird durch die universelle Aufstellbarkeit der Haltevorrichtung zudem der Einsatzbereich gegenüber bekannten Vorrichtungen erweitert.

Weitere vorteilhafte Eigenschaften werden nachfolgend unter Bezugnahme auf die Darstellung eines Ausführungsbeispiels der Erfindung anhand der Zeichnung näher beschrieben. Darin zeigen in skizzierter Darstellung:
- Figur 1:: eine Seitenansicht einer Haltevorrichtung unter Andeutung eines 6-eckigen oder runden Minerallecksteins bzw. Knabberteils in einer Explosionsdarstellung;
- Figur 2:: eine Draufsicht auf die Anordnung von Figur 1 und
- Figur 3:: eine seitliche Ansicht der Anordnung von Figur 1 in einem zusammengebauten Zustand.

Über die verschiedenen Abbildungen hinweg werden gleiche Teile stets mit gleichen Bezugszeichen und Bezeichnungen versehen. Aufgrund der vergleichsweise höheren wirtschaftlichen Bedeutung wird nachfolgend ohne Beschränkung eines Einsatzes der vorliegenden Erfindung im Wesentlichen nur auf eine Verwendung in der Aufzucht und/oder Mast von Schweinen als wirtschaftlich sehr wichtigen Nutztieren im landwirtschaftlichen Bereich eingegangen.

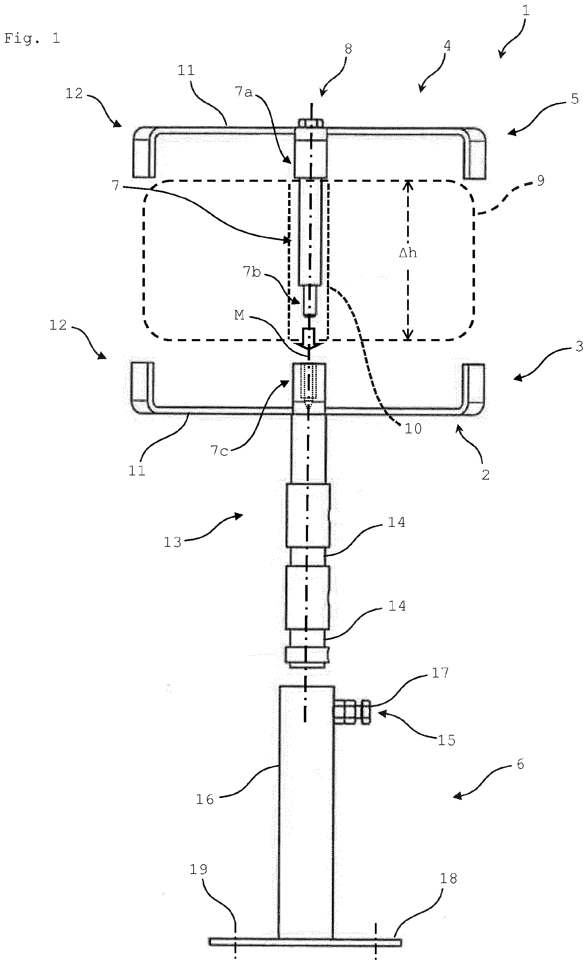

Figur 1 ist eine Darstellung einer Haltevorrichtung 1 in seitlicher Ansicht in einer Art von Explosionsdarstellung. Demnach umfasst die Haltevorrichtung 1 ein Unterteil 2 mit einem unteren Teller 3, ein Oberteil 4 mit einem oberen Teller 5 und ein Fußteil 6. Oberteil 4 und Unterteil 2 sind über einen Zapfen 7 miteinander lösbar verbunden. Hierzu ist im vorliegenden Ausführungsbeispiel im Bereich des Zapfens 7 ein durch einen Maulschüssel bedienbaren Schraubenkopf 8 vorgesehen. Dieser über den Schraubenkopf 8 bedienbare schraubbare Zapfen 7 kann in einer nicht weiter dargestellten Alternative aber auch z.B. als Bajonettverschluss ausgebildet sein. In jedem Fall wird ein Einsatz von Werkzeug minimiert, wobei ein Lösen der Verbindung zwischen Oberteil 4 und Unterteil 2 und mithin eine freie Zugänglichkeit des Zapfens 7 von Hand realisierbar ist. Zugleich ist ein Lösen einer derartigen Verbindung oder Ablösen von Bestandteilen durch das Vieh bei korrekter Bedienung auch dauerhaft ausgeschlossen.

Der Zapfen 7 als Element der Verbindung zwischen dem Unterteil 2 und dem Oberteil 4 ist hier mehrteilig ausgebildet. Damit ist es vorteilhafterweise auch leicht möglich, den Zapfen 7 unter Änderung einer Länge Δh zu fixieren. Dazu kann entweder die in einer Hülse 7a geführte Schraubverbindung entsprechend ausgewechselt oder mit einem Gewindeende 7b durch Betätigung des Schraubenkopfes 8 entsprechend weit in ein Gewindeloch 7c eingeschraubt werden. Damit sind auch die jeweiligen Teller 3, 5 an dem Unterteil 2 und dem Oberteil 4 unter Anpassung auf eine jeweilige Bauhöhe Δh des eingesetzten Leck- und/oder Knabberteils 9 gegeneinander drehfest fixiert.

In der Abbildung von Figur 1 sind in gepunkteten Linien ein 6-eckiger oder ein runder Mineralleckstein bzw. Knabberteil als Leck- und/oder Knabberteil 9 angedeutet. Das Leck- und/oder Knabberteil 9 mit einer entlang einer Mittelachse M durchgehend verlaufenden zylindrischen Ausnehmung 10 ist hier bereits so weit über den Zapfen 7 gestülpt worden, dass in einem abschließenden Schritt das Oberteil 4 mit dem Unterteil 2 durch die Schraubverbindung über den Zapfen 7 entlang des Pfeils lösbar verbunden werden kann.

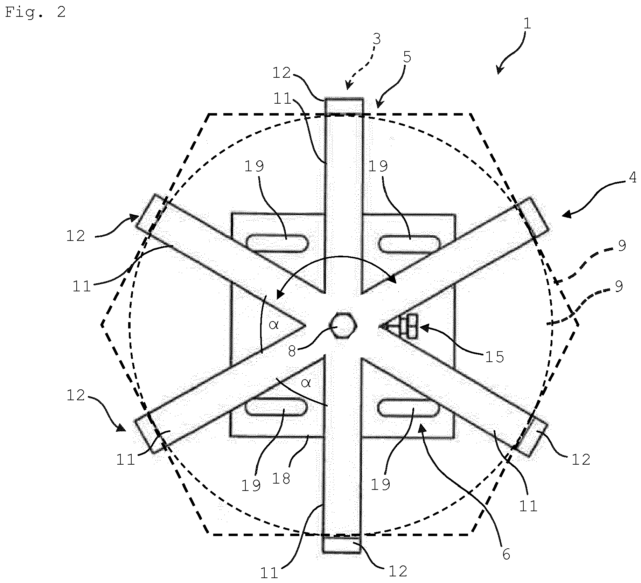

Figur 2 stellt eine Draufsicht auf die Anordnung von Figur 1 dar. Da das Oberteil 4 und das Unterteil 2 soweit deckungsgleich ausgebildet sind, ist hier nur das Oberteil 4 sichtbar. Es gilt aber auch für das verdeckt liegende Unterteil 2, dass das Oberteil 4 im Gegensatz zu bekannten Vorrichtungen nicht länger einen geschlossenen Teller oder eine Kreisscheibe mit Ausnehmungen umfasst. Der Teller 5 wird hier durch drei bzw. sechs in radialer Richtung verlaufende Stäbe 11 gebildet.

Durch diese hier gleichlang gewählten Stäbe 11 ist der Teller 5 im Wesentlichen sternförmig mit gleichen Winkeln α zwischen benachbarten Stäben 11 ausgebildet. Dabei ist anhand der Abbildung von Figur 1 weiter erkennbar, dass freie Enden 12 der Stäbe 11 gekröpft sind. Hierdurch wird einerseits eine weitgehend wackelfreie Fixierung des Leck- und/oder Knabberteils 9 zwischen Oberteil 4 und Unterteil 2 bewirkt, andererseits wird das Risiko einer Verletzung des Viehs vermindert.

Bei einem eckigen, hier 6-eckigen Leck- und/oder Knabberteil 9 liegen das Oberteil 4 und das Unterteil 2 in der darstellten Art und Weise aufgrund der Außenform zueinander zwangsweise deckungsgleich. Aber auch bei einem runden Leck- und/oder Knabberteil 9 ist eine deckungsgleiche Positionierung der in radialer Richtung verlaufende Stäbe 11 der Teller 3, 5 wünschenswert, um eine gleichmäßige Abnutzung zu realisieren.

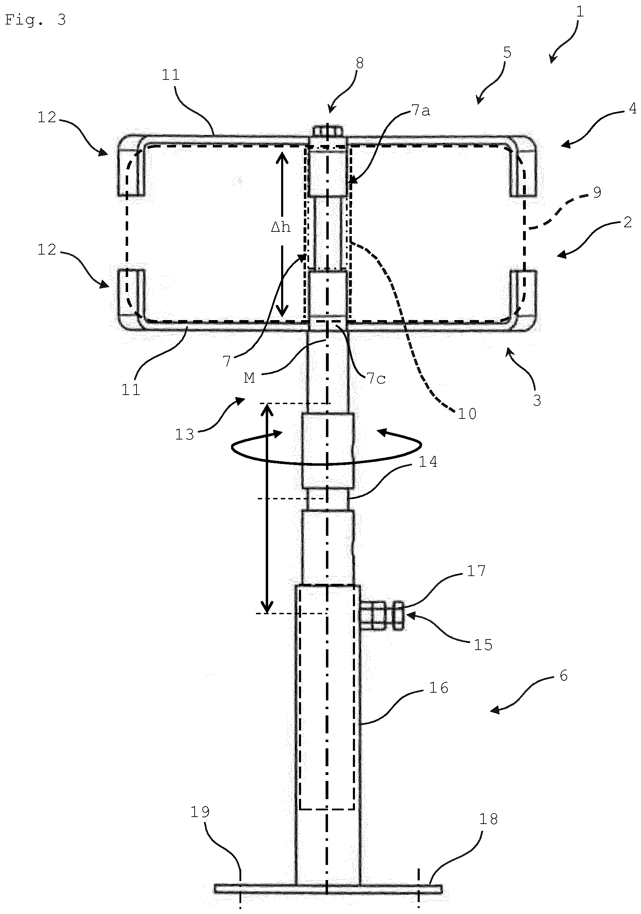

Figur 3 ist eine seitliche Ansicht der Anordnung von Figur 1 in einem zusammengebauten Zustand. Das Oberteil 4 und das Unterteil 2 bilden eine sichere Einfassung des Leck- und/oder Knabberteils 9 fast nach Art eines Korbes. Dabei sind weite Bereiche des Leck- und/oder Knabberteils 9 für das Vieh zugänglich gehalten, um einen möglichst weitgehenden Verzehr unter sicherer Fixierung des Leck- und/oder Knabberteils 9 zu gewährleisten.

Wie schon anhand der Abbildung von Figur 1 erkennbar, so läuft der Zapfen 7 jenseits des unteren Haltetellers 3 in ein Rohr 13 oder einen in einem Fußteil 6 drehbar fixierten Stab hin aus. Der Zapfen 7 ist mehrteilig aufgebaut und umfasst die Hülse 7a mit dem Gewindeende 7b, das durch Betätigung des Schraubenkopfes 8 in das Gewindeloch 7c eingedreht wird. Die Hülse 7a kann in gestrichelt in Figur 3 dargestellter Weise einer Bauhöhe Δh des jeweils einzusetzenden Salzleck- und/oder Knabberteils 9 entsprechend gewählt werden. Damit kann im Zuge eines Einschraubens des Gewindeendes 7b in Gewindeloch 7c dadurch keine übergroße Spannung auf das jeweilige Salzleck- und/oder Knabberteil 9 mit der möglichen Folge dessen Zerstörung aufgebacht werden, da diese Spannung durch die entsprechend dimensionierte Hülse 7a aufgenommen wird. Eine zur sicheren Fixierung des neu eingesetzten Salzleck- und/oder Knabberteils 9 ist dennoch sichergestellt.

Das Rohr 13 weist hier zwei radial geschlossen verlaufende Nuten 14 oder Einkerbungen auf, in die in einer Einbaulage ein Fixierungselement 15 eines Fußteils 6 lösbar eingreift. Der Fußteil 6 umfasst einen das Rohr 13 aufnehmenden Rohrabschnitt 16 oder er weist eine zylindrische Ausnehmung auf, wie in Figur 3 angedeutet.

Das Fixierungselement 15 ist im vorliegenden Ausführungsbeispiel als Schraube 17 ausgeführt. Damit kann durch Lösen nur der einen Schraube 17 die restliche Vorrichtung von dem Fußteil 6 getrennt werden. Zudem ist eine Position bzw. eine Lagehöhe des Minerallecksteins bzw. Knabberteils 9 wahlweise in eine von mehreren fixen Positionen leicht und schnell einstellbar. Damit ist z.B. ein einem Wachstum junger Ferkel entsprechender Höhenangleich über einen durch einen Pfeil in Figur 3 angedeuteten Bereich durchführbar. Dabei ist jeweils eine auch gegen ein Aushebeln gesicherte Lage des Minerallecksteins bzw. Knabberteils 9 einstellbar.

Der Fußteil 6 umfasst weiter eine Montageplatte 18 mit Ausnehmungen 19 für nicht weiter dargestellte Befestigungselemente. Die Ausnehmungen 19 sind länglich ausgebildet, um einen Toleranzausgleich z.B. im Zuge einer Verschraubung der Montageplatte 18 auf einem Stallboden zu schaffen, wobei auch eine Anpassung an entsprechende Maße bei Spaltböden berücksichtigt ist. Eine erfindungsgemäße Haltevorrichtung ist über das Fußteil 6 somit auf einem Boden, einer Wand, wie auch an einer Decke sicher und weiterhin drehbar fixierbar. Bei einer Wandbefestigung macht eine horizontal liegende Drehachse des Minerallecksteins bzw. Knabberteils 9 durch dessen Fixierung zwischen Oberteil 4 und Unterteil 2 vorteilhafterweise keine zusätzlichen Sicherungsmaßnahmen erforderlich.

Damit ist vorstehend eine unter guter Anpassung universell einsetze Haltevorrichtung 1 für ein Leck- und Knabberteil 9 für Tiere beschrieben worden. Die sichere Halterung des Salzleck- und Knabberteils 9 garantiert zusammen mit seiner Drehbarkeit eine verbesserte Wirtschaftlichkeit aufgrund einer verlängerten Standzeit des Verbrauchsmaterials. Ein Wechsel eines verbrauchten Salzleck- und Knabberteils 9 ist unter geringem Werkzeugeinsatz von Hand schnell und sicher durchführbar. Eine erfindungsgemäße Vorrichtung zeichnet sich damit gegenüber bekannten Vorrichtungen durch ihre verbesserte Handhabbarkeit und Wirtschaftlichkeit sowie gute Anpassbarkeit an diverse Einsatzfälle aus.

### Bezugszeichenliste

- 1: Haltevorrichtung
- 2: Unterteil
- 3: unterer Teller
- 4: Oberteil
- 5: oberer Teller
- 6: Fußteil
- 7: Zapfen
7a Hülse
7b Gewindeende
7c Gewindebohrung
- 8: Schraubenkopf, durch einen Maulschüssel bedienbar
- 9: Mineral- bzw. Salzleck- oder Knabberteil / Leck- und/ oder Knabberteil
- 10: durchgehend verlaufende zylindrische Ausnehmung
- 11: Stab in dem Radius oder dem Durchmesser einer Stirnfläche des jeweiligen Mineral- bzw. Salzleckteils 9 entsprechender Länge
- 12: freies Ende der Stäbe 11
- 13: Rohr
- 14: Nut oder Einkerbung
- 15: Fixierungselement am Rohrabschnitt 16
- 16: Rohrabschnitt, der das Rohr 13 des Fußteils 6 aufnimmt
- 17: Schraube
- 18: Montageplatte
- 19: Ausnehmung für ein Befestigungselement
- M: Mittelachse
- α: Winkel zwischen den Stäben 11

## Patentansprüche

1. Haltevorrichtung für ein Leck- und Knabberteil (9) für Tiere, insbesondere einen Mineral- und Salzleckstein für die Zucht und/oder Mast von Nutztieren,
wobei das Leck- und Knabberteil (9) entlang einer Mittelachse (M) eine durchgehende zylindrische Ausnehmung aufweist, durch die es über einen Stift stülpbar und auf einem Teller (3) drehbar fixierbar ist, und der Stift mit einem Fußteil (6) verbunden ist, **dadurch gekennzeichnet, dass**
die Haltevorrichtung (1) ein Unterteil (2) mit einem unteren Teller (3),
ein Oberteil (4) mit einem oberen Teller (5) und den Fußteil (6) umfasst, und
der Stift als Zapfen (7) ausgebildet ist,
wobei das Oberteil (4) und das Unterteil (2) über den Zapfen (7) miteinander lösbar verbunden sind,
so dass das Leck- und Knabberteil (9) zwischen dem oberen Teller (5) und dem unteren Teller (3) lösbar fixierbar ist und die Anordnung aus Unterteil (2) und Oberteil (4) um die Längsachse (M) des Zapfens (7) drehbar ausgebildet ist und dass mindestens einer der Teller (3, 5) durch mindestens einen in radialer Richtung verlaufenden Stab (11) gebildet und bei mehr als zwei Stäben (11) im Wesentlichen sternförmig ausgebildet ist.

2. Haltevorrichtung nach dem vorhergehenden Anspruch, **dadurch gekennzeichnet, dass** mindestens drei Stäbe (11) vorgesehen sind, vorzugsweise 5 bis 6 gleichmäßig, mit zueinander gleichem Winkel (α) verteilt angeordnete Stäbe (11).

3. Haltevorrichtung nach einem der beiden vorhergehenden Ansprüche, **dadurch gekennzeichnet, dass** freie Enden (12) der Stäbe (11) gekröpft sind.

4. Haltevorrichtung nach dem vorhergehenden Anspruch, **dadurch gekennzeichnet, dass** die Stäbe (11) zum teilweisen Umgreifen des zwischen den Tellern (3, 5) eingespannten Mineral- und Salzlecksteins oder Knabberteils (9) ausgebildet sind.

5. Haltevorrichtung nach einem der vorhergehenden Ansprüche, **dadurch gekennzeichnet, dass** der Zapfen (7) jenseits des unteren Haltetellers (3) in ein Rohr (13) oder einen Stab ausläuft, die in dem Fußteil (6) drehbar fixiert sind.

6. Haltevorrichtung nach einem der vorhergehenden Ansprüche, **dadurch gekennzeichnet, dass** der Zapfen (7) als Verbindung zwischen Unterteil (2) und Oberteil (4) mehrteilig ausgebildet ist.

7. Haltevorrichtung nach dem vorhergehenden Anspruch, **dadurch gekennzeichnet, dass** ein Teil des Zapfens (7) als Gewindestange oder Schraube oder Gewindeende (7b) ausgebildet ist und ein zweiter Teil des Zapfens (7) als Aufnahme mit einer Gewindebohrung (7c).

8. Haltevorrichtung nach dem vorhergehenden Anspruch, **dadurch gekennzeichnet, dass** die Gewindestange oder Schraube oder das Gewindeende (7b) im Bereich des zugehörigen Tellers (3, 5) durch ein Werkzeug betätigbar ausgebildet ist.

9. Haltevorrichtung nach einem der vorhergehenden Ansprüche , **dadurch gekennzeichnet, dass** der Zapfen (7) unter Änderung einer Länge (Δh) mit einer dieser Länge entsprechenden Hülse (7a) die Teller (3, 5) drehfest fixiert, insbesondere durch Verspannung.

10. Haltevorrichtung nach einem der vorhergehenden Ansprüche 7 oder 8, **dadurch gekennzeichnet, dass** die Gewindestange oder Schraube oder das Gewindeende (7b) in einer Hülse des zugehörigen Tellers (3, 5) drehbar geführt ist.

11. Haltevorrichtung nach Anspruch 5, **dadurch gekennzeichnet, dass** das Rohr (13) mindestens eine außenseitige Nut (14), Ringnut oder Einkerbung aufweist, in die in einer Einbaulage ein Fixierungselement (15) des Fußteils (6) lösbar eingreift.

12. Haltevorrichtung nach dem vorhergehenden Anspruch, **dadurch gekennzeichnet, dass** der Fußteil (6) ein das Rohr (13) aufnehmenden Rohrabschnitt (16) oder eine zylindrische Ausnehmung aufweist.

13. Haltevorrichtung nach dem vorhergehenden Anspruch, **dadurch gekennzeichnet, dass** das Fixierungselement (15) als Schraube (17) ausgeführt ist, die durch den Rohrabschnitt (16) oder die zylindrische Ausnehmung des Fußteils (6) hindurch in eine der Nuten (14) oder Einkerbungen des Rohrs (13) zur Ausbildung einer höhenverstellbaren Drehverbindung lösbar greift.

14. Haltevorrichtung nach dem vorhergehenden Anspruch, **dadurch gekennzeichnet, dass** der Fußteil (6) über eine Montageplatte (18) und mindestens einer darin befindlichen Ausnehmung (19) für Befestigungselemente auf einem Boden, an einer seitlichen Wand oder an einer Decke fixierbar ist.

15. Haltevorrichtung nach einem der vorhergehenden Ansprüche 12 oder 13, **dadurch gekennzeichnet, dass** der Rohrabschnitt (16) des Fußteils (6) durch eine daran fixierte Montageplatte (18) abgeschlossen ist, die zum Toleranzausgleich längliche Ausnehmungen (19) für Befestigungselemente insbesondere in Form von Schrauben aufweist.

## Claims

1. Holding device for a licking and nibbling part (9) for animals, in particular a mineral and salt lick for breeding and/or fattening farm animals,
wherein the leakage and nibbling part (9) has a continuous cylindrical recess along a central axis (M), through which it can be placed over a bolt and rotatably fixed on a plate (3),
and the bolt is connected to a foot part (6),
**characterised in that**
the holding device (1) is a lower part (2) with a lower plate (3),
an upper part (4) with an upper plate (5) and comprising the foot part (6), and
the bolt is designed as a pin (7),
wherein the upper part (4) and the lower part (2) are detachably connected to each other via the pin (7),
so that the leakage and nibbling part (9) can be detachably fixed between the upper plate (5) and the lower plate (3) and the arrangement of lower part (2) and upper part (4) is designed to be rotatable about the longitudinal axis (M) of the pin (7), and **in that** at least one of the plates (3, 5) is formed by at least one rod (11) extending in the radial direction and, in the case of more than two rods (11), is designed to be substantially star-shaped.

2. Holding device according to the preceding claim, **characterized in that** at least three bars (11) are provided, preferably 5 to 6 bars (11) evenly distributed at an equal angle (α) to each other.

3. Holding device according to one of the two preceding claims, **characterized in that** free ends (12) of the bars (11) are cranked.

4. Holding device according to the preceding claim, **characterized in that** the rods (11) are designed to partially embrace the mineral and salt lick or nibble part (9) clamped between the plates (3, 5).

5. Holding device according to one of the preceding claims, **characterized in that** the pin (7) runs out beyond the lower holding plate (3) into a tube (13) or rod which are rotatably fixed in the base part (6).

6. Holding device according to one of the preceding claims, **characterized in that** the pin (7) is designed in several parts as a connection between lower part (2) and upper part (4) .

7. Holding device according to the preceding claim, **characterized in that** one part of the pin (7) is designed as a threaded rod or screw or threaded end (7b) and a second part of the pin (7) is designed as a receiver with a threaded bore (7c).

8. Holding device according to the preceding claim, **characterized in that** the threaded rod or screw or the threaded end (7b) is designed to be actuated by a tool in the region of the associated plate (3, 5).

9. Holding device according to one of the preceding claims, **characterized in that** the pin (7), while changing a length (Δh) with a sleeve (7a) corresponding to this length, fixes the plates (3, 5) non-rotatably, in particular by bracing.

10. Holding device according to one of the preceding claims 7 or 8, **characterized in that** the threaded rod or screw or the threaded end (7b) is rotatably guided in a sleeve of the associated plate (3, 5).

11. Holding device according to claim 5, **characterised in that** the tube (13) has at least one external groove (14), annular groove or notch, into which a fixing element (15) of the foot part (6) detachably engages in an installation position.

12. Holding device according to the previous claim, **characterized in that** the foot part (6) has a tube section (16) receiving the tube (13) or a cylindrical recess.

13. Holding device according to the preceding claim, **characterized in that** the fixing element (15) is designed as a screw (17) which detachably engages through the tube section (16) or the cylindrical recess of the foot part (6) into one of the grooves (14) or notches of the tube (13) to form a height-adjustable rotary connection.

14. Holding device according to the preceding claim, **characterized in that** the foot part (6) can be fixed to a floor, to a lateral wall or to a ceiling by means of a mounting plate (18) and at least one recess (19) located therein for fastening elements.

15. Holding device according to one of the preceding claims 12 or 13, **characterised in that** the tubular section (16) of the base part (6) is closed off by a mounting plate (18) which is fixed thereto and which has elongated recesses (19) for fastening elements, in particular in the form of screws, for tolerance compensation.

## Revendications

1. Dispositif de maintien d'un produit à lécher et à grignoter (9) pour les animaux, en particulier un produit à lécher minérale et salée pour l'ascenseur et/ou l'engraissement des animaux de la ferme
dans laquelle le produit à lécher et à grignoter (9) présente un évidement cylindrique continu le long d'un axe central (M), à travers lequel elle peut être placée sur un maneton et fixée de manière rotative sur une plaque (3),
et le maneton est reliée à une partie du pied (6), **caractérisé en ce que**
le dispositif de retenue (1) est une partie inférieure (2) avec une plaque inférieure (3),
une partie supérieure (4) avec une plaque supérieure (5) et comprenant la partie de pied (6), et
le maneton est conçue comme une épingle (7),
dans laquelle la partie supérieure (4) et la partie inférieure (2) sont reliées entre elles de manière amovible par l'intermédiaire de la épingle (7),
afin que le produit à lécher et à grignoter (9) puisse être fixée de manière amovible entre la plaque supérieure (5) et la plaque inférieure (3)
et l'agencement de la partie inférieure (2) et de la partie supérieure (4) est conçu pour pouvoir tourner autour de l'axe longitudinal (M) de la épingle (7), et **en ce qu'**au moins l'une des plaques (3, 5) est formée par au moins une tige (11) s'étendant dans la direction radiale et, dans le cas de plus de deux tiges (11), est conçue pour être sensiblement en forme d'étoile.

2. Dispositif de maintien selon la revendication précédente, **caractérisé en ce qu'**au moins trois tiges (11) sont prévues, de préférence 5 à 6 tiges (11) réparties uniformément sous un angle égal (α) les unes par rapport aux autres.

3. Dispositif de maintien selon l'une des deux revendications précédentes, **caractérisé en ce que** les extrémités libres (12) des tiges (11) sont coudées.

4. Dispositif de maintien selon la revendication précédente, **caractérisé en ce que** les tiges (11) sont conçues pour entourer partiellement le produit (9) à lécher et à grignoter de minéraux et de sel serrée entre les plaques (3, 5).

5. Dispositif de retenue selon l'une des revendications précédentes, **caractérisé en ce que** l'épingle (7) se prolonge au-delà de la plaque de retenue inférieure (3) dans un tube (13) ou une tige, qui sont fixés de manière rotative dans la partie de pied (6).

6. Dispositif de retenue selon l'une des revendications précédentes, **caractérisé en ce que** l'épingle (7) est conçue en plusieurs parties comme une connexion entre la partie inférieure (2) et la partie supérieure (4).

7. Dispositif de retenue selon la revendication précédente, **caractérisé en ce qu'**une partie de l'épingle (7) est conçue comme une tige filetée ou une vis ou une extrémité filetée (7b) et une deuxième partie de l'épingle (7) est conçue comme un réceptacle avec un alésage fileté (7c).

8. Dispositif de maintien selon la revendication précédente, **caractérisé en ce que** la tige ou la vis filetée ou l'extrémité filetée (7b) est conçue pour être actionnée par un outil dans la région de la plaque associée (3, 5).

9. Dispositif de retenue selon l'une des revendications précédentes, **caractérisé en ce que** l'épingle (7), tout en modifiant une longueur (Δh) avec un manchon (7a) correspondant à cette longueur, est fixée les plaques (3, 5) de manière à ce qu'elles ne puissent pas tourner, en particulier par un contreventement.

10. Dispositif de maintien selon l'une des revendications précédentes 7 ou 8, **caractérisé en ce que** la tige ou la vis filetée ou l'extrémité filetée (7b) est guidée en rotation dans un manchon de la plaque associée (3, 5).

11. Dispositif de retenue selon la revendication 5, **caractérisé en ce que** le tube (13) présente au moins une rainure extérieure (14), une rainure annulaire ou une encoche, dans laquelle un élément de fixation (15) de la partie de pied (6) s'engage de manière amovible dans une position de montage.

12. Dispositif de maintien selon la revendication précédente, **caractérisé en ce que** la partie de pied (6) présente une section de tube (16) recevant le tube (13) ou un évidement cylindrique.

13. Dispositif de fixation selon la revendication précédente, **caractérisé en ce que** l'élément de fixation (15) est conçu comme une vis (17) qui s'engage de manière amovible à travers la section de tube (16) ou l'évidement cylindrique de la partie de pied (6) dans une des rainures (14) ou des encoches du tube (13) pour former une connexion rotative réglable en hauteur.

14. Dispositif de maintien selon la revendication précédente, **caractérisé en ce que** la partie de pied (6) peut être fixée à un plancher, une paroi latérale ou un plafond au moyen d'une plaque de montage (18) et d'au moins un évidement (19) pour des éléments de fixation qui y sont situés.

15. Dispositif de fixation selon l'une des revendications précédentes 12 ou 13, **caractérisé en ce que** la partie tubulaire (16) de la partie de base (6) est fermée par une plaque de montage (18) qui y est fixée et qui présente, pour la compensation des tolérances, des évidements allongés (19) pour des éléments de fixation, en particulier sous forme de vis.
